# EUROPEAN PATENT SPECIFICATION

(11) **EP 1 268 156 B1**
(45) Date of publication and mention of the grant of the patent: **26.05.2004**
(21) Application number: 01915473.1
(22) Date of filing: 21.03.2001
(51) Int. Cl.: B29C 45/16, B29C 45/44, F16L 47/06

(54) **METHOD AND APPARATUS FOR MAKING A PIPE COUPLING**
VERFAHREN UND VORRICHTUNG ZUR HERSTELLUNG EINER ROHRKUPPLUNG
PROCEDE ET APPAREIL POUR LA FABRICATION D'UN RACCORD DE TUYAUTERIE

(30) Priority: 21.03.2000 GB 0006662; 30.03.2000 GB 0007575; 01.03.2001 GB 0105016
(43) Date of publication of application: 02.01.2003
(73) Proprietor: Mullan, David, Norton Lindsey, Warwickshire CV35 8JJ (GB)
(72) Inventor: Mullan, David, Norton Lindsey, Warwickshire CV35 8JJ (GB)
(74) Representative: Harrison Goddard Foote
(86) International application number: PCT/GB2001/001231
(87) International publication number: WO 2001/070480

(56) References cited:
- EP-A- 0 936 046
- GB-A- 1 477 074
- GB-A- 2 035 192
- US-A- 4 842 540

## Description

### Field of the Invention

The invention relates to plastic pipe fitting provided with internal seals. The pipe fitting may be, for instance, a pipe (conduit), a pipe coupling which is straight or provides a bend of, for instance 90°, 135° or 180° or another tubular ended plastics arrangements such as a water trap. Reference will be made herein below to pipe coupling but it should be appreciated that the invention has application to any plastics arrangement which includes at least one tubular socket having an internal seal.

### Background to the Invention

Pipe couplings may include at least one socket for receiving a pipe end, the socket having an internal seal for effecting sealing between the pipe coupling and the pipe end. Traditionally, the seal for such a pipe fitting is formed separately from the body of the coupling and the seal is then inserted into the socket sand held therein with some form of retention member which prevents the seal being displaced during the fitting of the pipe length into the socket of the coupling.

More recently, methods have been proposed by which the seal is formed integrally with the socket, thereby avoiding the need for a retaining member and for the items to be assembled together. In GB2192578A, a pipe coupling is made by injection moulding a socket in a mould tool having inner and outer cores and a third core defining an axially extending internal surface of the socket. Once the socket has been formed, the third core is moved axially in a direction towards the mouth of the socket to open up a space between the socket and the inner core into which seal material may be injected. The inner mould is then moved axially away from the socket and, in so doing, deforms the resilient seal. Core movement is effected while the mould tool is closed.

Such a method is effective for a socket in which the only hindrance to removal of the inner core is a sufficiently resiliently deformable seal. However where the seal is not sufficiently deformable in a resilient manner and/or where the inner surface of the socket includes hindering internal projections, for instance because the seal is located within a recessed spaced from the end of the socket, such a method is not satisfactory.

GB-A-1477074 discloses a two-stage method of moulding a pipe coupling having a tubular plastics member and an annular sealing member. The first member is injection moulded in a first moulding stage and the second member is then injection moulded onto the preformed member in a second injection moulding stage. Both stages are preferably carried out in a common mould using different mould profiles respectively.

### Statements of the Invention

According to the present invention there is provided a method for making a pipe coupling comprising a body portion including a socket and an internal seal located within said socket and for making sealing contact with a pipe end received in the socket, said body portion and said seal being formed of plastics materials, the method comprising, in a first stage, injection moulding said body portion using a first internal core and, in a second stage, injection moulding said seal within said socket using a second internal core and by injecting material for the seal in molten form through the wall of said body portion to a space defined by said body portion and said second core, whereby, on solidifying, said second material adheres to said body portion, characterised in that said first and second internal cores each include first and second axially separable parts and said first part is provided with an external circumferential groove for accommodating an inwardly directed lip on the socket and, after each stage of injection moulding, said first part is moved axially relative to the second part causing the lip to move out of the groove thereby widening the mouth of the socket sufficiently to enable relatively unimpeded movement of said second part in a direction out of said socket.

The present invention also provides apparatus for making a pipe coupling comprising a body portion including a socket and an internal seal located within said socket for making sealing contact with a pipe end received in the socket, said body portion and said seal being formed of plastics materials, the apparatus comprising means for injection moulding said body portion using a first internal core and means for injection moulding the seal within said socket using a second internal core, said seal moulding means including means for injecting material for the seal in molten form through the wall of the body portion to a space defined by the body portion and said second core, whereby, on solidifying, said second material adheres to said body portion, characterised in that said first and second internal cores each include first and second axially separable parts and said first part is provided with an external circumferential groove for accommodating an inwardly directed lip on the socket, and means for moving said first part axially relative to the second part after each stage of injection moulding causing the lip to move out of the groove thereby widening the mouth of the socket sufficiently to enable relatively unimpeded movement of said second part in a direction out of said socket

### Detailed Description of the Invention

The present invention will now be described, by way of example only, with reference to the accompanying drawings.

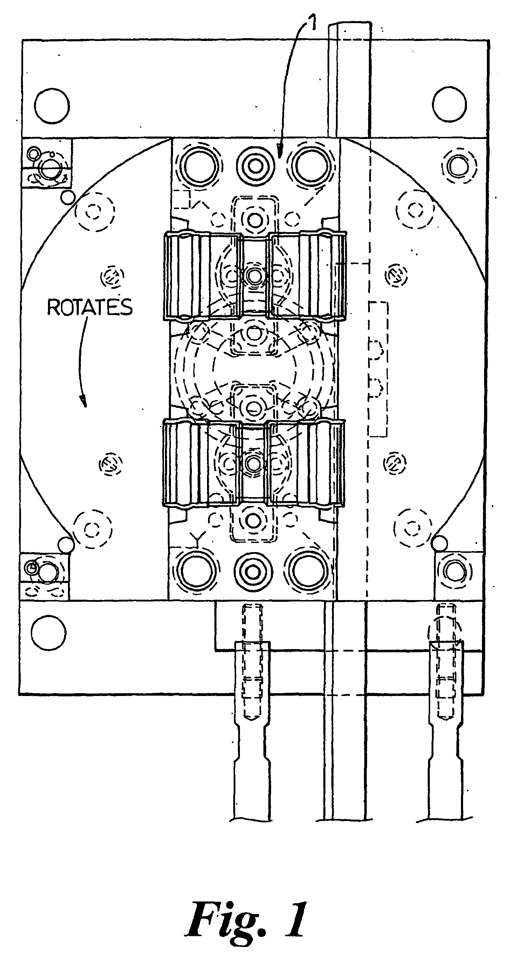

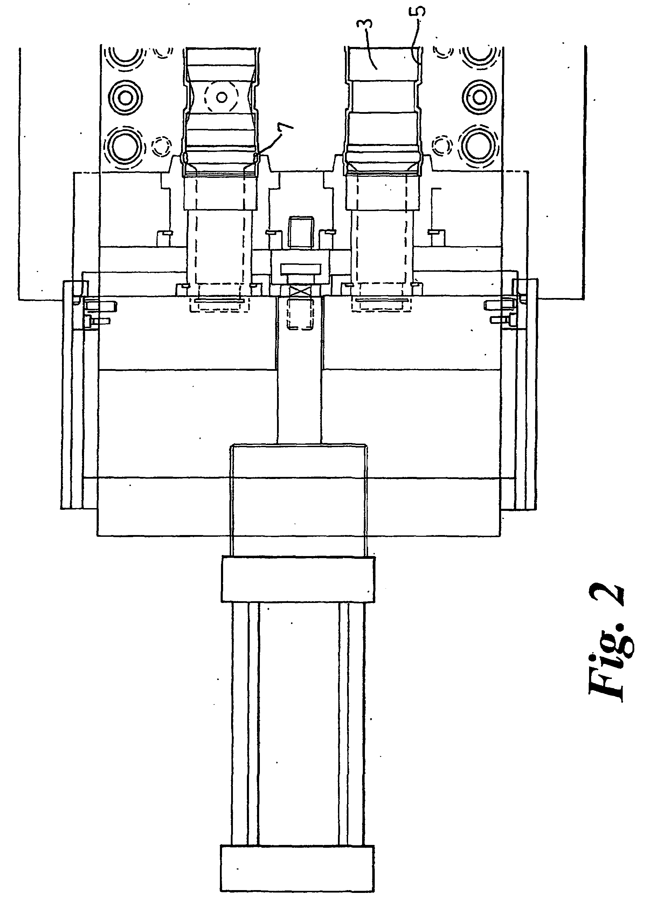

Figure 1 of the accompanying drawings illustrates part of injection mould tooling which may be used in the method of the present invention. As illustrated in Figure 1, this part of the tooling is substantially in the form of a core block 1 rotatable about a vertical axis. Figure 2 illustrates the injection part of the moulding tool which allows the other components of the mould to be brought into alignment with those parts provided by the cavity block 1. The lower part of the tooling is shown in Figure 2, the internal core arrangement 3 being such that, when brought into alignment with the cavity block 1, the body part 5 of a pipe coupling is formed. In the top half of Figure 2 the core parts are such as to define a space into which the sealed material may be injected.

Accordingly a pipe coupling may be made, using tooling such as is illustrated in Figures 1 and 2, in a two-stage process involving a first stage injection moulding process, rotation of the cavity block 1 and a second stage procedure in which the internal seal is formed.

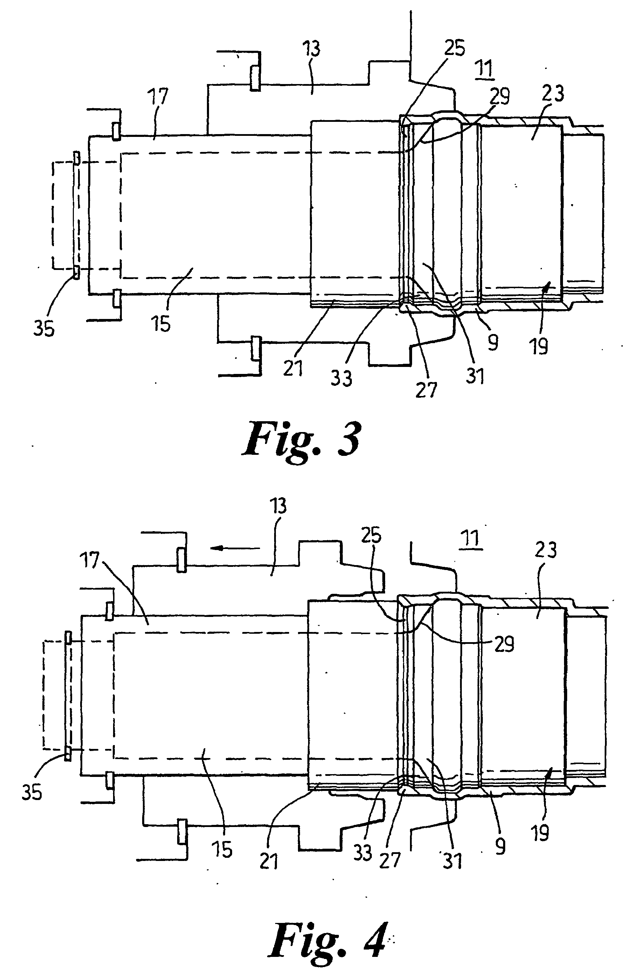

Figure 3 of the accompanying drawings shows in detail the arrangement of the mould parts around one of the sockets 9 of the pipe coupling. The mould parts included outer mould parts 11 and 13 and an inner core assembly 15. Assembly 15 includes outer and inner core parts 17 and 19 respectively. Each of these core parts has an enlarged head portion, 21 and 23 respectively. These head portions together define the inner surface of the mould. Head portion 21 of inner part 17 is provided with a circumferential groove 25 which defines an internal circumferential lip 27 formed as a result of the injection moulding of the body portion of the coupling. Head portion 23 of outer part 19 is located axially inwardly of head portion 21 and a surface 29 defines a neck portion 31, extending between head portion 23 and the remainder of inner part 15, is shaped so as to fit flush to a corresponding internal surface at the innermost end of head portion 21 of outer part 17.

Having formed the body portion of the coupling by injection moulding, including socket 9 illustrated in Figure 3, outer mould part 13 is then caused to move axially away from the socket 9 to the position shown in Figure 4.

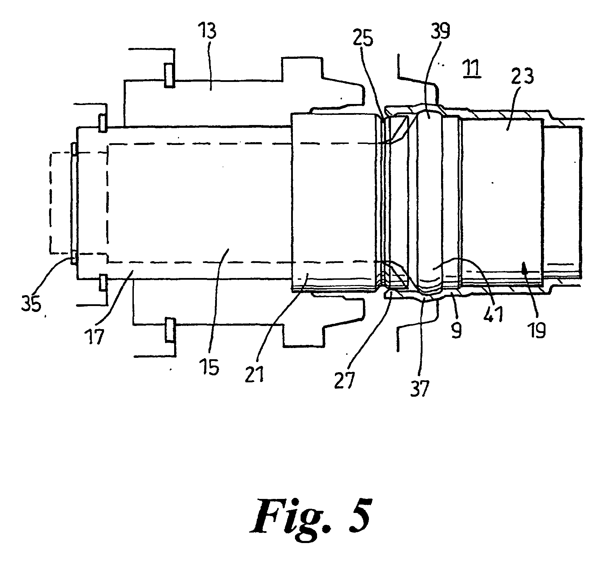

Outer part 17 of core assembly 15 is capable of axial movement away from inner core part 19 and socket 9. The extent of this axial movement is limited by stop member 35. Once mould part 13 has been moved to the position illustrated in Figure 4, outer core part 17 is then axially moved until its left-hand extremity (as seen in Figures 3 and 4) abuts stop member 35. The position is then as illustrated in Figure 5 and it will be seen head portion 21 of inner core part 17 has separated from head portion 23 of outer core part 19 and that groove 25 of head portion 21 of outer core part 17 is now displaced from lip 27 of socket 9. As a result, the mouth of socket 9 has become enlarged. Due to the resiliently deformable nature of the plastic of the coupling, this enlargement of the socket mouth extends from lip 27 in a gradually decreasing manner to outer mould part 11 where this mould part maintains the original diameter of the socket. Accordingly, between mould part 11 and lip 27 the socket mouth is prised outwardly.

Extending from a position just inwardly of the left-hand edge of outer mould part 11 in a direction towards lip 27, socket 9 bulges outwardly at 37 to form a recess 39. This recess will accommodate the internal seal as will be discussed below. The inner surface of the recess is defined by an enlarged annular portion 41 of head portion 23 of inner mould part 13.

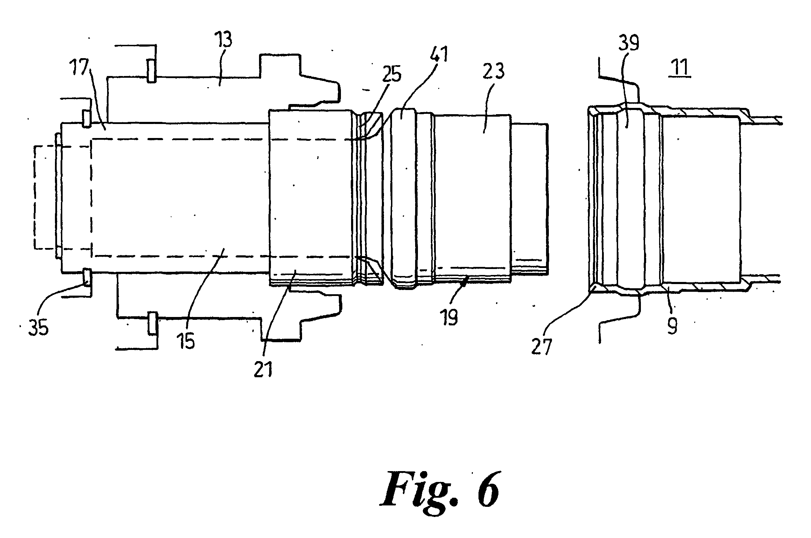

By expanding the mouth of socket 9 in the manner described above, the inner core part 19, and in particular the head portion 23 carrying enlarged portion 41, can more easily be pulled or extracted from its moulding position. Figure 6 illustrates the position after the outer mould part 13 and inner core assembly 15 have been pulled completely away from the coupling. During the initial part of this step, that part of head portion 21 of inner mould part 11 which lies between groove 25 and the right-hand end of head portion 21 will maintain the mouth of socket 9 in its enlarged state since the lip 27 will be engaged with the outer surface of the end portion of head portion 21. This part of the pull is sufficient for the enlarged portion 41 of head portion 23 of outer mould part 13 to move out of recess 39. During subsequent extraction of the inner core assembly from the coupling, the enlarged portion 39 will move along the inner surface of the socket 9 between recess 39 and lip 27, and then past lip 27, following which the mouth of the socket, being resiliently deformable, will return to its original position while the remainder of head portion 23 of inner core part 19 is extracted from the coupling, as illustrated in Figure 6.

Accordingly, this multi-stage core extraction or pulling procedure allows that part of the core assembly which defines the inner surface of the recess for accommodating the seal to be easily removed from the body portion of the coupling.

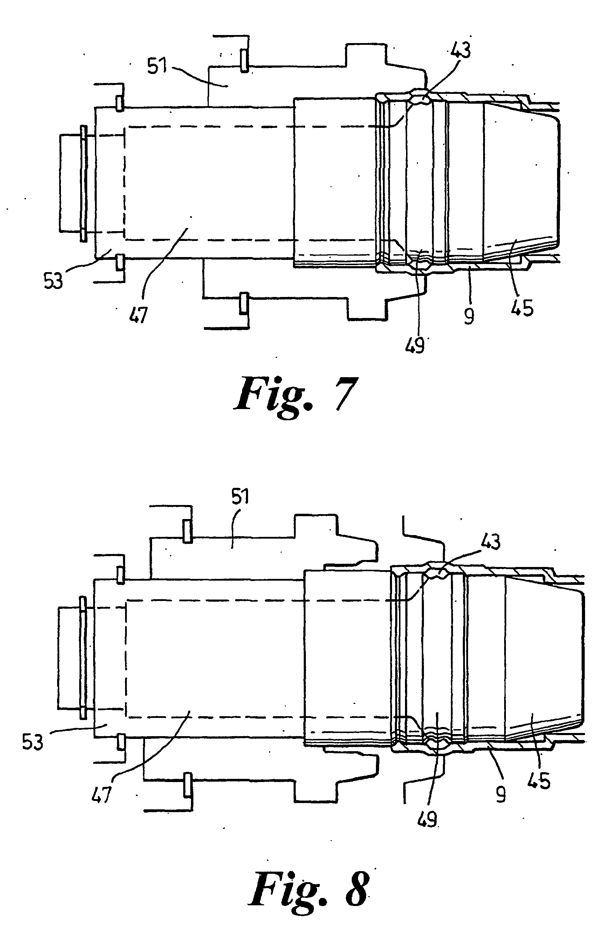

Referring now to Figure 7 of the accompanying drawings, there is illustrated in detail the arrangement of the mould parts around one of the sockets 9 of the pipe coupling for that part of the tooling associated with the formation of the inner seal 55. The mould parts are essentially similar to those described above in connection with a first stage of the moulding procedure. The main differences are to the shape of head portion 45 of inner core part 47. The right-hand end of this core part slopes inwardly to the right-hand edge, the original shape (of head portion 23 not being required to form part of the mould as was previously the case). Enlarged portion 39 of head portion 23 is now replaced by a reduced diameter portion 49, the outer surface of which is shaped to provide the desired inner surface of the internal seal. Accordingly, recess 43 is defined by the outer surface of portion 49 and the inner surface of socket 9.

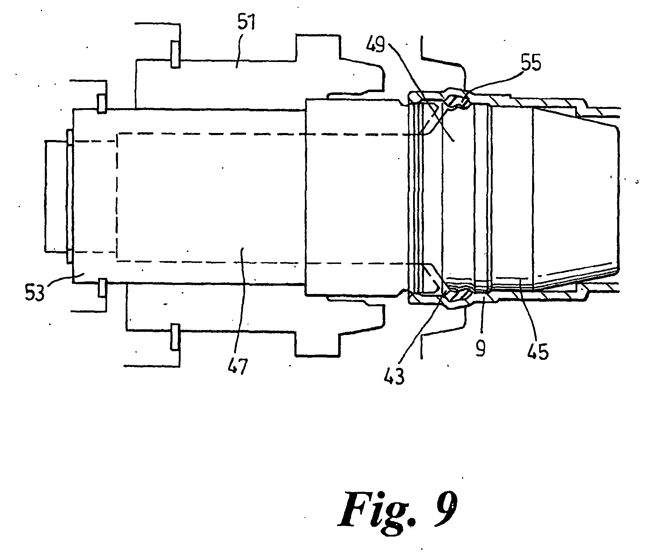

Seal material is then injected into recess 43, the procedure for which will be described in greater detail below. Once this has been effected and the seal material has been allowed to solidify, the mould parts are then separated in a manner similar to that described above after the formation of the body portion of the coupling. Figure 8 shows the first step in this extraction procedure, namely, the removal of outer mould part 51. Figure 9 illustrates the second step, the separation of the outer and inner core parts 53 and 47 respectively. This results in the widening of the mouth of socket 9 and enables the head portion 45 of inner core part 47 to be moved past seal 55 without dislodging it from its location within recess 43.

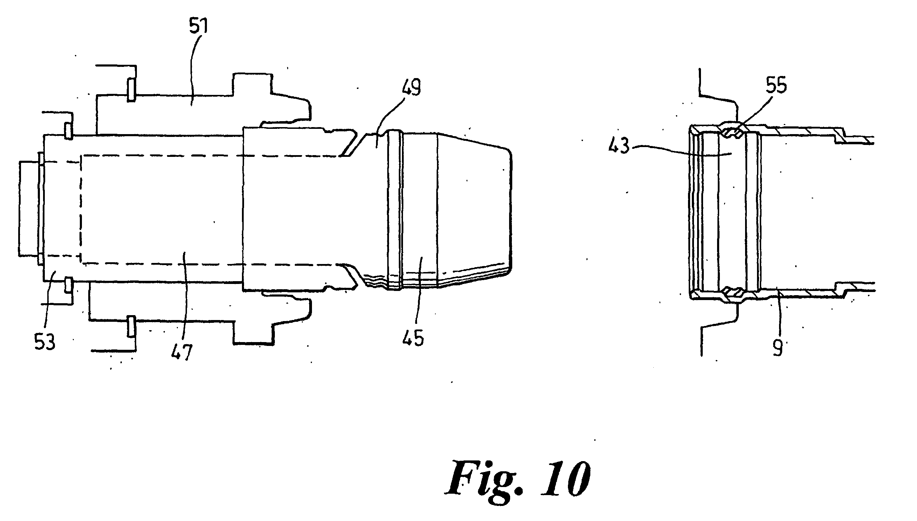

Figure 10 illustrates the position when the inner core assembly and the outer mould part 51 have been completely removed from the coupling.

In the above-described procedure, core pulling takes place with the mould cavity closed.

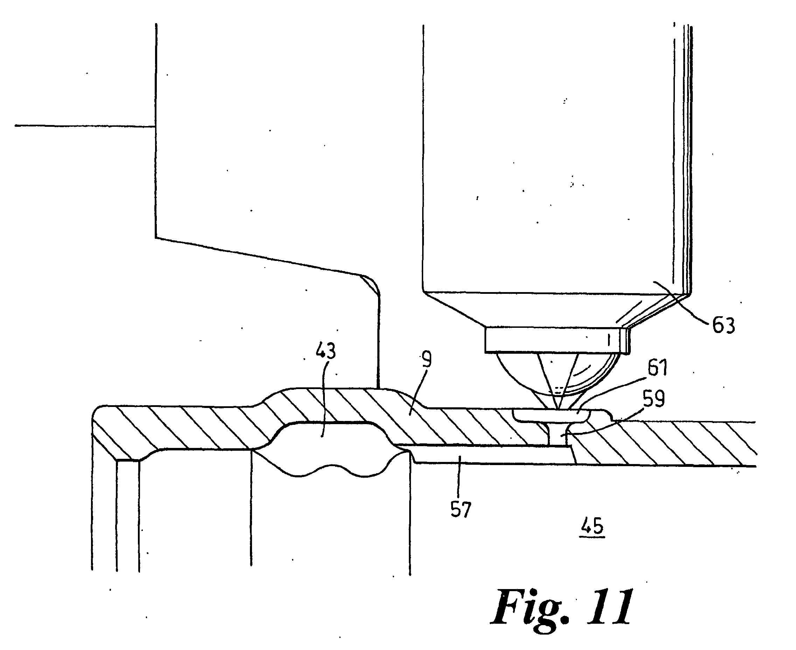

Figure 11 illustrates in detail the injection of the seal material into recess 43. The wall of socket 9 is provided with a moulded-in channel 57 which extends from recess 43 axially along the inner surface of the socket away from its mouth. Channel 57 is defined by head portion 45 of inner core part 47 as well as the inner surface of the wall of socket 9. At the end of channel 57, the channel communicates with a radially outwardly extended hole 59 which terminates at an enlarged recess 61 on the outer surface of the wall of socket 9.

Molten seal material is introduced into recess 61 by means of an injection tool having a hot runner nozzle 63, the end of which is introduced into recess 61. Molten seal material is then forced down hole 59, along channel(s) 57 into recess 43. The seal material is then allowed to solidify so that it occupies the entire annular recess 43 as well as the channel(s) 57 and hole 59.

The material of the seal 43 can be any suitable thermoplastic elastomer.

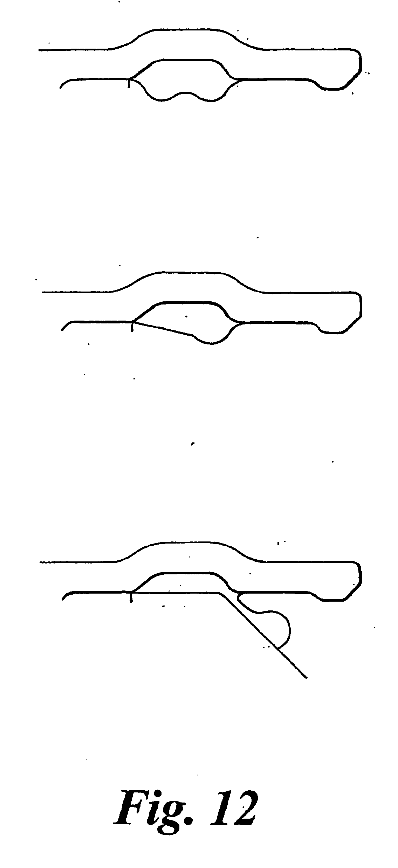

Figure 12 of the accompanying drawings illustrates some alternative seal profile which may be made by a method, and apparatus, of the present invention.

The material of the body of the pipe coupling may be, for instance, polypropylene. The seal material may be a thermoplastic elastomer referred to as a TPE-V material in BS/EN681-2. Such a material is very flexible with a Shore hardness of about 50.

## Claims

1. A method for making a pipe coupling comprising a body portion (5) including a socket (9) and an internal seal (55) located within said socket and for making sealing contact with a pipe end received in the socket, said body portion (5) and said seal (55) being formed of plastics materials, the method comprising, in a first stage, injection moulding said body portion (5) using a first internal core (15) and, in a second stage, infection moulding said seal (55) within said socket (9) using a second internal core and by injecting material for the seal in molten form through the wall of said body portion to a space defined by said body portion (5) and said second core, whereby, on solidifying, said second material adheres to said body portion, **characterised in that** said first and second internal cores each include first and second axially separable parts (17, 19, 53, 47) and said first part (17, 53) is provided with an external circumferential groove for accommodating an inwardly directed lip (27) on the socket (9) and, after each stage of injection moulding, said first part (17, 53) is moved axially relative to the second part (19, 47) causing the lip to move out of the groove thereby widening the mouth of the socket (9) sufficiently to enable relatively unimpeded movement of said second part (19, 47) in a direction out of said socket.

2. Apparatus for making a pipe coupling comprising a body portion (5) including a socket (9) and an internal seal (55) located within said socket for making sealing contact with a pipe end received in the socket, said body portion and said seal being formed of plastics materials, the apparatus comprising means for injection moulding said body portion (5) using a first internal core (15) and means for injection moulding the seal (55) within said socket (9) using a second internal core, said seal moulding means including means for injecting material for the seal in molten form through the wall of the body portion to a space defined by the body portion and said second core, whereby, on solidifying, said second material adheres to said body portion, **characterised in that** said first and second internal cores each include first and second axially separable parts (17, 19, 53, 47) and said first part (17, 53) is provided with an external circumferential groove for accommodating an inwardly directed lip (27) on the socket (9), and means for moving said first part (17, 53) axially relative to the second part (19, 47) after each stage of injection moulding causing the lip (27) to move out of the groove thereby widening the mouth of the socket (9) sufficiently to enable relatively unimpeded movement of said second part (19, 47) in a direction out of said socket.

## Patentansprüche

1. Verfahren zum Herstellen einer Rohrkupplung mit einem Körperteil (5) umfassend eine Hülse (9) und eine innere Dichtung (55), die innerhalb der Hülse angeordnet ist und eines zur Herstellung dichtenden Kontaktes mit einem Rohrende, das in der Hülse aufgenommen ist, dient, wobei das Körperteil (5) und die Dichtung (55) aus Plastikmaterial gebildet sind, wobei das Verfahren in einer ersten Stufe ein Spritzgießen des Körperteils (5) unter Verwendung eines ersten inneren Kerns (15) und in einer zweiten Stufe ein Spritzgießen der Dichtung (55) innerhalb der Hülse (9) unter Verwendung eines zweiten inneren Kerns und durch Einspritzen von Material für die Dichtung in geschmolzener Form durch die Wand des Körperteils (5) in einen Raum umfaßt, der durch das Körperteil (5) und den zweiten Kern definiert ist, wodurch beim Erstarren das zweite Material an dem Körperteil haftet, **dadurch gekennzeichnet, daß** sowohl der erste als auch der zweite innere Kern erste und zweite axial lösbare Teile (17, 19, 53, 47) aufweist und das erste Teil (17, 53) mit einer äußeren Umfangsaussparung zur Aufnahme einer nach innen gerichteten Lippe (27) an der Hülse (9) versehen ist und daß nach jeder Stufe des Spritzgießens das erste Teil (17, 53) axial relativ zu dem zweiten Teil (19, 47) bewegt wird, wodurch die Lippe aus der Aussparung bewegt wird, wodurch die Öffnung der Hülse (9) ausreichend erweitert wird, um eine relativ ungehinderte Bewegung des zweiten Teils (19, 47) in einer Richtung aus der Hülse heraus zu ermöglichen.

2. Vorrichtung zum Herstellen einer Rohrkupplung mit einem Körperteil (5) umfassend eine Hülse (9) und eine innere Dichtung (55), die innerhalb der Hülse zur Herstellung eines dichtenden Kontakts mit einem Rohrende, das in der Hülse aufgenommen ist, angeordnet ist, wobei das Körperteil und die Dichtung aus Plastikmaterial gebildet sind, wobei die Vorrichtung ein Mittel zum Spritzgießen des Körperteils (5) unter Verwendung eines ersten inneren Kerns (15) und ein Mittel zum Spritzgießen der Dichtung (55) innerhalb der Hülse (9) unter Verwendung eines zweiten inneren Kerns umfaßt, wobei das Dichtspritzmittel ein Mittel zum Einspritzen von Material für die Dichtung in geschmolzener Form durch die Wand des Körperteils in einen Raum umfaßt, der durch den Körperteil und den zweiten Kern definiert ist, wodurch bei der Erstarrung das zweite Material an dem Körperteil haftet, **dadurch gekennzeichnet, daß** sowohl der erste als auch der zweite innere Kern erste und zweite axial lösbare Teile (17, 19. 53, 47) aufweist und der erste Teil (17, 53) mit einer äußeren Umfangsaussparung zur Aufnahme einer nach innen gerichteten Lippe (27) an der Hülse (9) versehen ist sowie mit einem Mittel zum axialen Bewegen des ersten Teils (17, 53) relativ zu dem zweiten Teil (19, 47) nach jeder Stufe des Spritzgießens, welches eine Bewegung der Lippe (27) dahingehend verursacht, daß sie sich aus der Aussparung bewegt, wodurch die Öffnung der Hülse (9) ausreichend erweitert wird, um eine relativ ungehinderte Bewegung des zweiten Teils (19, 47) in eine Richtung aus der Hülse heraus zu ermöglichen.

## Revendications

1. Procédé de fabrication d'un raccord de tuyauterie comprenant une partie de corps (5) incluant un manchon (9) et un scellement interne disposé dans ledit manchon pour réaliser un contact étanche avec une extrémité de tuyauterie reçue dans le manchon, ladite partie de corps (5) et ledit scellement (55) étant formés en matériau plastique, le procédé comprenant, dans une première étape, mouler par injection ladite partie de portion (5) en utilisant un premier noyau interne (15) et dans une seconde étape, mouler par injection ledit scellement (55) dans ledit manchon (9), en utilisant un second noyau interne, et par injection de matériau pour le scellement, sous forme fondue au travers de la paroi de ladite partie de corps, vers un espace défini par ladite partie de corps (5) et ledit second noyau, tandis que lors de la solidification, ledit second matériau adhère à ladite partie de corps, **caractérisé en ce que** lesdits premier et second noyau internes incluent chacun des première et seconde parties (17, 19, 53, 47) séparables axialement, et ladite première partie (17, 53) est prévue avec une gorge circonférentielle externe pour recevoir une lèvre dirigée vers l'intérieur (27), sur le manchon, et après chaque étape de moulage par injection, ladite première partie (17, 53) est déplacée axialement par rapport à la seconde partie (19, 47), provoquant le déplacement de la lèvre hors de la gorge, élargissant ainsi l'embouchure du manchon (9) suffisamment pour permettre un mouvement relativement sans entrave de ladite seconde partie (19, 47) en direction hors ledit manchon.

2. Appareil pour la réalisation d'un raccord de tuyauterie comportant une partie de corps (5) incluant un manchon et un scellement interne (55) disposé dans ledit manchon (9) pour réaliser un contact étanche avec une extrémité de tuyauterie reçue dans le manchon (9), ladite partie de corps et ledit scellement étant formés de matériau plastique, l'appareil comprenant des moyens pour mouler par injection ladite partie de corps (5) en utilisant un premier noyau interne (15) et des moyens pour mouler par injection le scellement (55) dans ledit manchon (9) en utilisant un second noyau interne, lesdits moyens de moulage de scellement incluant des moyens pour injecter du matériau pour le scellement sous forme fondue au travers de la paroi de la partie de corps vers un espace défini par la partie de corps et ledit second noyau, tandis que lors de la solidification, ledit second matériau adhère à ladite partie de corps, **caractérisé en ce que** lesdits premier et second noyaux internes incluent chacun des première et seconde parties séparables axialement (17, 19, 53, 47) et ladite première partie (17, 53) est prévue avec une gorge circonférentielle externe apte à recevoir une lèvre (27) dirigée vers l'intérieur sur le manchon et les moyens pour déplacer ladite première partie (17, 53) axialement par rapport à la seconde partie (19, 47), après chaque étape d'injection par moulage, provoquant le déplacement de la lèvre (27) hors de la gorge, élargissant ainsi l'embouchure du manchon suffisamment pour permettre un mouvement relativement sans entrave de ladite seconde partie (19, 47) en direction hors dudit manchon.
